# EUROPEAN PATENT SPECIFICATION

(11) **EP 0 668 345 B1**
(45) Date of publication and mention of the grant of the patent: **12.12.2001**
(21) Application number: 94202716.0
(22) Date of filing: 21.09.1994
(51) Int. Cl.: C11D 3/395

(54) **Hypochlorite bleaching compositions**
Hypochloritbleichmittelzusammensetzungen
Compositions de blanchiment d'hypochlorite

(30) Priority: 22.02.1994 EP 94870033
(43) Date of publication of application: 23.08.1995
(73) Proprietor: THE PROCTER & GAMBLE COMPANY, Cincinnati, Ohio 45202 (US)
(72) Inventor: Agostini, Franceso, I-20145 Milano (IT); Caire, Giuseppe, I-18100 Imperia (IT); Trigiante, Giuseppe, I-56100 Pisa (IT)
(74) Representative: Engisch, Gautier

(56) References cited:
- EP-A- 0 144 166
- EP-A- 0 204 472
- EP-A- 0 298 172
- EP-A- 0 317 066
- EP-A- 0 421 738
- WO-A-88/05461
- GB-A- 1 320 919
- US-A- 4 594 175

## Description

### Technical field

The present invention relates to a method of bleaching fabrics with a liquid bleaching composition that is suitable for laundry applications including hand washing as well as washing with automatic washing machines.

### Background of the invention

Liquid bleaching compositions are well known in the art. Amongst the different bleaching compositions available, those relying on bleaching by hypochlorite are often preferred. See, for example, WO-A-8805461 which discloses an aqueous composition comprising hypochlorite, sodium carbonate and sodium hydroxide and the use of said composition for removing stains from the fabrics.

However, the drawbacks associated with the use of hypochlorite-based compositions are that said compositions may damage and yellow fabrics.

It is therefore an object of the present invention to provide a hypochlorite-containing composition, suitable for use in laundry, whereby the whiteness to the fabrics is improved.

It is a further object of the present invention to provide a hypochlorite-containing composition, suitable for use in laundry, whereby fabric safety is improved.

A certain amount of hypochlorite bleach is present in solution in the form of free radicals, i.e., molecule fragments having one or more unpaired electrons, such as Cl, OH and/or ClO. Indeed, said free radicals result essentially from the hypochlorite decomposition pathways. It has now been observed that said free radicals are detrimental to the whiteness performance of a hypochlorite composition and damage the fabrics. Indeed, it is believed that the free radicals once formed are especially reactive with compounds having for example free hydroxide groups such as cotton fibers, oxidize them and thus contribute to the decomposition of said cotton fibers.

Therefore we have found that it is essential to inactive the free radicals formed in the bleaching environment in order to improve fabric safety and whiteness.

It has now been found that this can be achieved by formulating hypochlorite bleach compositions comprising a radical scavenger, said radical scavenger being an aromatic compound, i.e. a compound comprising an unsaturated ring system of from 3 to 20 carbon atoms and having a double bond set comprising a total of 4n+2 electrons, wherein n is an integer of from 0 to 4.

More specifically, it has been found that compositions comprising a hypochlorite bleach together with such a radical scavenger as above defined, or mixtures thereof, provide improved whiteness and safety to the fabrics bleached with said compositions as compared to the same compositions but without said radical scavenger, or mixtures thereof. We have also found that, in the preferred embodiment where the hypochlorite bleach compositions according to the present invention comprise as a buffering system, i.e. carbonate salts together with silicate salts, outstanding whiteness and fabric safety performance are provided. Indeed, it has surprisingly been found that the use of a radical scavenger as above defined, or mixtures thereof, together with said buffering system in a pre-wash bleaching composition results in a synergistic effect on whiteness performance.

A further advantage of the compositions of the present invention is that in addition to their outstanding whitening action said compositions allow also excellent stain removal. Indeed, it has also been observed that the radical scavengers of the present invention act as a surfactant. The lypophilic behavior of said radical scavengers, e.g. benzoic acid, allows to ensure complete wetting of the soils, helps to solubilize the soil ingredients, e.g. organic residues, and helps to prevent redeposition of the soils.

In the field of the dish washing compositions, EP-A-421 768 discloses stable thickened liquid cleaning compositions comprising from 0.1% to 10% by weight of the total composition of a cross-linked polycarboxylate polymer thickening agent, a hypochlorite bleach which comprises from 0.2% to 2.5% of available chlorine, from 0.05% to 5% of a radical scavenger and a buffering system. The preferred radical scavenger is benzoic acid and the buffering system may be carbonates and/or silicates. Said compositions display enhanced physical stability.

In the field of hard-surface cleaners, EP-B-144 166 discloses a thickened aqueous cleaning composition comprising amongst others ingredients, sodium hydroxide, from 0.01% to 0.1% by weight of the total composition of an alkali metal carbonate, from 1% to 12% by weight of hypochlorite and from 0.01% to 1% by weight of salicylic acid derivatives, or benzoic acid derivatives or mixtures thereof. It is also disclosed that inorganic compounds can be added to provide the desired ionic strength. However, the '166 patent does not list silicates as an inorganic compound but states that inorganic compounds such as silicates are avoided because of their tendency to have adverse effects on the stability of the compositions during storage.

GB-A-1320919 relates to a detergent comprising an aqueous solution having a solid content of 10-70% of alkali metal or ammonium polyphosphate.

US-A-4594175 relates to a low foaming composition for machine warewashing comprising active halogen and a sulfonate rinse agent.

EP-A-0 317 066 discloses thickened aqueous cleaning compositions which are viscoelastic and have utility as a drain opening composition or as a hard surface cleaner. Said compositions comprise as a thickening system a specific quaternary ammonium compound and an organic counterion selected from alkyl and aryl carboxylates, alkyl and aryl sulfonates, sulfonated alkyl and aryl alcohols and mixtures thereof. Said compositions may also contain from 1% to 10% by weight of the total composition of an alkali metal hypochlorite, from 0.5% to 20% by weight of an alkali metal hydroxide, from 0% to 5% by weight of carbonates and from 0% to 5% by weight of silicates. Indeed, the '066 patent application exemplifies compositions containing cetyltrimethyl ammonium chloride as the quaternary ammonium compound, hypochlorite, sodium hydroxide, silicates and carbonates together with a mixture of organic counterions comprising at least sodium xylene sulfonate, or benzenesulfonic acid, or 4-chlorobenzoic acid, or 4-chlorobenzenesulfonic acid or salicylic acid.

The '066 patent application also exemplifies carbonates salts-free compositions comprising cetyltrimethyl ammonium chloride as the quaternary ammonium compound, hypochlorite, sodium hydroxide and silicates together with benzoic acid, 4-toluic acid, 4-chlorobenzoic acid, 2-chlorobenzoic acid, 2,4-chlorobenzoic acid, 4-nitrobenzoic acid, phthalic acid, naphthoic acid, salicylic acid, benzenesulfonic acid toluenesulfonic acid, sodium cumenesulfonate, sodium xylenesulfonate, 4-chlorobenzene sulfonate, or methylnaphthalene sulfonate, as the organic counterion.

EP-A-0 342 786 discloses thickened aqueous cleaning compositions which are viscoelastic and have utility as a drain opening composition or as a hard surface cleaner. Said compositions comprise as a thickening system from 0.1% to 10% by weight of the total composition of a betaine or sulfobetaine having a C14-C18 alkyl, or C10-C18 alkylamino or alkylamido group, and from 0.01% to 10% by weight of an organic, anionic counterion selected from C2-C6 alkyl carboxylates, aryl carboxylates, C2-C10 alkyl sulfonates, aryl sulfonates, sulfated C2-C10 alkyl alcohols, sulfated aryl alcohols, and mixtures thereof. Said compositions may also contain from 1% to 15% by weight of the total composition of an alkali metal hypochlorite, from 0.5% to 20% by weight of an alkali metal hydroxide, from 0% to 5% by weight of carbonates and from 0% to 5% by weight of silicates.

Actually, the benefits derivable from the use of the radical scavengers of the present invention in an aqueous alkaline bleaching composition for bleaching fabrics, i.e. improved whiteness performance and safety to the fabrics as well as excellent stain removal, have not been acknowledged in the prior art.

### Summary of the invention

The present invention encompasses a method of bleaching fabrics to improve fabric whiteness and/or fabric safety which comprises the steps of:
- first contacting said fabrics with an aqueous bleaching composition having a pH of from 9 to 14 comprising an alkali metal hypochlorite or mixtures thereof, silicate salts and/or more than 0.1% by weight carbonate salts, and a radical scavenger or mixtures thereof, characterised in that said radical scavenger comprises an unsaturated ring system of from 3 to 20 carbon atoms and has a double bond set comprising a total of 4n+2 electrons, wherein n is an integer of from 0 to 4, and preferably said radical scavenger has one of the following formulas: 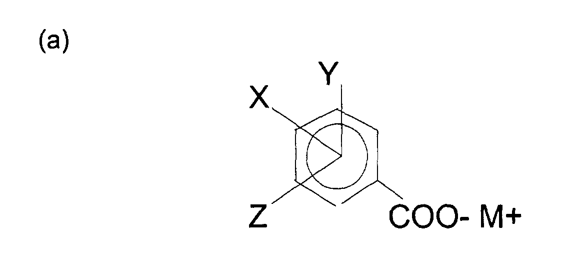 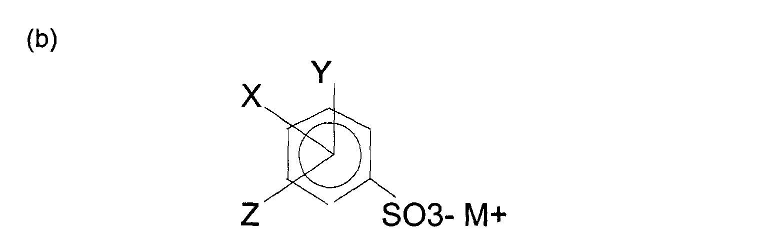 wherein each X, Y, and Z is -H, -COO-M⁺, -Cl, -Br,
   -SO₃-M⁺, -NO₂, -OCH₃, -OH, or a C₁ to C₁₀ primary and secondary alkyl and M is H or an alkali metal,
- then allowing said fabrics to remain in contact with said composition for a period of time sufficient to bleach said fabrics,
- then rinsing said fabrics in water to remove said composition.

The present invention further encompasses the use of an aqueous bleaching composition having a pH of from 9 to 14 comprising an alkali metal hypochlorite or mixtures thereof and a radical scavenger as herein defined, or mixtures thereof, to improve fabric whiteness.

### Detailed Description of the invention

The compositions used in the present invention are aqueous bleaching compositions. Thus, they comprise as a first essential feature, hypochlorite in an aqueous matrix. Various forms of alkali metal hypochlorite are commercially available. Although this is not critical for the present invention it is preferred herein to use sodium hypochlorite. Compositions used in the present invention comprise a bleaching amount of alkali metal hypochlorite, which typically represents from 0.1% to 10% by weight of the total composition, based on active chlorine, of alkali metal hypochlorite. Preferred compositions herein comprise from 3% to 6%, based on active chlorine, of alkali metal hypochlorite. As a second essential feature, the compositions used in the present invention comprise a radical scavenger or mixtures thereof, said radical scavenger comprising an unsaturated ring system of from 3 to 20 carbon atoms, preferably of from 3 to 18 and more preferably of from 5 to 14 and having a double bond set comprising a total of 4n+2 electrons, wherein n is an integer of from 0 to 4, preferably of from 1 to 3. Indeed said radical scavengers include benzene derivatives, naphthalene derivatives, annulene derivatives, cyclopentadiene derivatives, cyclopropene derivatives and the like, especially aryl carboxylates and/or aryl sulfonates. Particularly suitable radical scavengers to be used in the present invention have one of the following formulas: 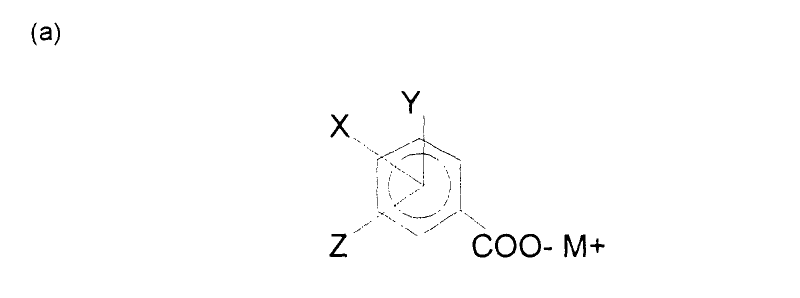 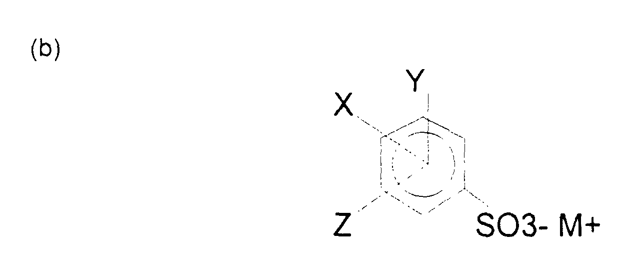 wherein each X, Y, and Z are -H, -COO-M⁺, -Cl, -Br, -SO₃-M⁺, -NO₂, -OCH₃, -OH or a C₁ to C₁₀ primary and secondary alkyl groups and M is H or an alkali metal, or mixtures thereof. Examples of these components include pyromellitic acid, i.e. where X, Y and Z are -COO-H⁺; hemimellitic acid and trimellitic acid, i.e. where X and Y are -COO-H⁺ and Z is H. Preferred to be used in the present invention as radical scavengers are phthalic acid; sulfophthalic acid; other mono-substituted phthalic acids; di-substituted benzoic acids; alkyl-, chloro-, bromo-, sulfo-, nitro- and carboxy- benzoic acids, i.e. where Y and Z are -H and X is a C₁ to C₁₀ primary and secondary alkyl groups, -Cl, -Br,-SO₃-H⁺, -NO₂ and -OCH₃, respectively and substituted sulfonic acids. Highly preferred examples of the radical scavengers useful in the present invention are benzoic acid, toluic acid, 4-toluene sulfonic acid, 2 n-octyl benzoic acid or mixtures thereof.

All the radical scavengers described above are the acidic form of the species, i.e. M is H. It is intended that the present invention also covers the salt derivatives of these species, i.e. M is an alkali metal, preferably sodium or potassium. In fact, since the pH of the compositions of the present invention is in the alkaline range, the radical scavengers of the present invention exist primarily as the ionized salt in the aqueous composition herein. The anhydrous derivatives of certain species described herein above can also be used in the present invention, e.g. pyromellitic dianhydride, phthalic anhydride, sulphthalic anhydride and the like.

The compositions used in the present invention comprise typically from 0.01% to 10% by weight of the total composition of a radical scavenger as defined above, or mixtures thereof, preferably from 0.01% to 8%, more preferably from 0.2% to 6% and most preferably from 0.5% to 4%.

As a third essential feature, the compositions used in the present invention have a pH as is of from 9 to 14, preferably of from 10 to 14, more preferably of from 11 to 13.5 and most preferably of from 11.5 to 13. Suitable means to achieve such a pH value include potassium and sodium hydroxide. It is in the alkaline range that the optimum stability and performance of the hypochlorite bleach is obtained. A strong source of alkalinity is also needed to prevent hypochlorite attack on the radical scavengers of the present invention.

As important in the present invention is to maintain the pH of the compositions of the present invention in the alkaline range throughout use. Thus, the compositions of the present invention further comprise a buffering system to buffer the pH of the present compositions throughout use. It is also suspected that the buffering of the hypochlorite compositions of the present invention reduces harshness to hands. Particularly useful to be used herein are silicate or carbonate salts, or mixtures thereof. The preferred alkali metal salts of silicate and carbonate are sodium silicate and sodium carbonate, both of which are commercially available, or mixtures thereof. Preferred compositions herein use a mixture of sodium carbonate and sodium silicate. The compositions herein comprise preferably more than 0.1% by weight of the total composition of sodium carbonate, preferably from 0.2% to 5%, more preferably from 0.5% to 3%, and preferably up to 3% by weight of the total composition of sodium silicate, preferably from 0.02% to 3%, more preferably from 0.04% to 3%.

Other buffering systems could be conveniently used herein such as sodium borate and sodium sesquicarbonate or mixtures thereof.

The compositions used in the present invention may also comprise optional ingredients such as complexing agents. Said complexing agents allow to reduce the amount of metal ions in the wash environment, thereby reducing indirectly the amount of free radicals formed instead of deactivating them once formed as the radical scavengers do. Suitable complexing agents to be used herein are the polycarboxylic acid derivatives of pyridine selected from the group of dipicolinic acid (2,6-pyridendicarboxylic acid) and derivatives thereof. Other complexing agents to be used herein are N,N-dialkyl aspartic acid, N,N-dialkyl glutamic acid. The compositions herein comprise from 0% to 5% by weight of the total composition of a complexing agent or mixtures thereof, preferably from 0.01% to 4%, more preferably from 0.01% to 3% and most preferably from 0.02% to 2%.

The compositions according to the present invention may further comprise other optional ingredients including bleach-stable surfactants, organic or inorganic alkalis, perfumes, bleach-stable perfume solubilizers, pigments, dyes, optical brighteners and solvents.

The present invention also encompasses the use of a composition comprising an alkali metal salt of hypochlorite, or mixtures thereof, and a radical scavenger as defined herein, or mixtures thereof, to improve fabric whiteness.

By "improve fabric whiteness" it is meant herein that the whiteness on fabric achieved by using the hypochlorite compositions of the present invention is improved compared to the whiteness obtained by using the same hypochlorite compositions but without any radical scavengers as herein defined. Also, it has been found that a synergistic effect on the whitening performance is associated with the use of hypochlorite bleach compositions comprising said radical scavenger or mixtures thereof together with carbonate salts and silicate salts when said compositions are used as pre-wash bleaching compositions.

A further advantage associated with the use of a composition comprising an alkali metal salt of hypochlorite and a radical scavenger as defined herein, or mixtures thereof, is that excellent fabric safety and stain removal are also provided. In other words, such a hypochlorite-containing composition which comprises a radical scavenger as defined herein allows, when used to bleach fabrics, to obtain better results in terms of fabric safety and stain removal as compared to the same composition but without said radical scavenger.

The compositions herein are used in diluted form in laundry application. The expression "use in diluted form" herein includes dilution by the user, which occurs for instance in hand laundry applications, as well as dilution by other means, such as in a washing machine. Typical dilution levels are of from 0.4% to 20% for hand laundry application and 0.1% to 10% in a washing machine. Due to the buffering system used herein the pH of a composition according to the present invention remains constant throughout use, i.e. the pH of a diluted composition is buffered from the moment the dilution is completed and until said hypochlorite bleaching composition is started to be rinsed away.

In a preferred embodiment of the present invention the compositions used in said method of bleaching fabrics comprise as buffering system carbonate salts together with silicate salts. Said method according to the present invention improves fabric whiteness and safety while excellent stain removal is provided.

More specifically, the method of bleaching fabrics according to the present invention comprises the steps of first contacting said fabrics with a composition having a pH of from 9 to 14 comprising an alkali metal hypochlorite or mixtures thereof, silicates and/or more than 0.1% by weight carbonates and a radical scavenger as defined herein before, or mixtures thereof, said composition being in diluted form, then allowing said fabrics to remain in contact with said composition, for a period of time sufficient to bleach said fabrics, typically 3 to 60 minutes, preferably 5 to 30 minutes, then rinsing said fabrics in water to remove said composition. If said fabrics are to be washed, i.e. with a conventional composition comprising at least one surface active agent, it is preferred to perform the method herein before said fabrics are washed. Indeed, it has been observed that bleaching said fabrics with the compositions herein prior to washing them with a detergent composition provides superior whiteness and stain removal with less energy and detergent than if said fabrics are washed first, then bleached. Accordingly, said method according to the present invention further comprises a subsequent step where said fabrics are washed with a detergent composition comprising at least one surface active agent.

The present invention will be further illustrated by the following examples.

### 1) Experimental data

The following examples will illustrate the present invention. Said compositions are made by mixing the listed ingredients in the listed proportions:

| Compositions | 1 | 2 | 3 |
|---|---|---|---|
| Sodium hypochlorite | 5.0 | 5.0 | 5.0 |
| Sodium hydroxide | 0.7 | 0.7 | 0.7 |
| Sodium carbonate | 1.0 | 1.0 | 1.0 |
| Benzoic acid | 1.0 | 1.0 | / |
| Sodium silicate (SiO₂) | 1.0 | / | / |
| pH | 13 | 13 | 13 |
| Water & minors | -------100%------- | | |

Compositions 1 and 2 are representative of the present invention. Composition 1 differs from composition 2 in that composition 2 does not contain silicate salts. Composition 3, is a hypochlorite bleach composition taken as a reference.

A single tracer launderometer test and a technical laundry test were carried out both by using said bleaching compositions alone and by using said bleaching compositions followed by the use of a detergent composition.

### 1.1) Bleaching only

### Launderometer test

The test was performed in a stainless steel vessel. First 110 ml of each of the above bleaching compositions 1, 2 and 3 were diluted in 6 liters of tap water. From these solutions, samples of 500 g were taken and conditioned to 18 °C. Then the tracers i.e. fabrics such as clothes, towels and the like, with standardized stains were added into each of said samples. The test was carried out at 18°C. The vessel was then kept under agitation for 20 minutes. At the end of the washing cycle the tracers were rinsed with water and dried in a room avoiding direct sun light exposition. Then, the tracers were evaluated by visual grading.

### Technical laundry test

The test was performed in a plastic(PP) vessel. First 85 ml of each of the above bleaching compositions 1, 2 and 3 were diluted in 5 liters of tap water and conditioned to 18 °C. Then the tracers i.e. fabrics such as clothes, towels and the like, with standardized stains were added into each of said prepared solutions. The test was carried out at 18°C for 20 minutes. The vessel was periodically agitated (every 5 min.). At the end of the washing cycle the tracers were rinsed with water and dried in a room avoiding direct sun light exposition. Then, the tracers were evaluated by visual grading.

The table below lists the results obtained for compositions 1 and 2, versus composition 3 as mathematical average of the results obtained with the two different tests mentioned herein above.

| | Whiteness single cycle | Greasy stains |
|---|---|---|
| Comp. 1 vs 3 | 0.8S | 0.9S |
| Comp. 2 vs 3 | 0.5S | 0.5 |

Where:
- Results are expressed on a 0 to 4 performance scale evaluated by expert judgment.
- S identifies statistically reproducible results calculate on the basis of 6 replicates each test.

### Comments:

The data clearly show the unexpected whiteness improvement and excellent stain removal performance delivered by the compositions used according to the present invention comprising benzoic acid as the radical scavenger, this after one wash cycle only (compositions 1 and 2) as compared to compositions available on the market (composition 3). Said data also surprisingly shows the additional effect of the use of sodium silicate together with benzoic acid, on the whitening performance (composition 1 as compared to composition 2).

### 1.2) Pre bleaching and washing with a detergent

### Launderometer test

The test was performed in a stainless steel vessel. First 110 ml of each of the above bleaching compositions 1, 2 and 3 were diluted in 6 liters of tap water. From these solutions, samples of 500 g were taken and conditioned to 18 °C. Then, the tracers i.e. fabrics such as clothes, towels and the like, with standardized stains were added in to each of said samples. The test was carried out at 18°C. The vessel was then kept under agitation for 20 minutes. At the end of the washing cycle the tracers were rinsed with water. Then, a detergent commercially available on the mark (Dash®) was used to wash the tracers. 170 g of the detergent were diluted into 20 liters of tap water. This solution was heated at 40°C. The vessel with 500 g of the detergent solution was then kept under agitation during 20 with the tracers. At the end of the washing cycle the tracers were rinsed and dried. Finally, the tracers were evaluated by visual grading.

### Technical laundry test

The test was performed in a plastic(PP) vessel. First 85 ml of each of the above bleaching compositions 1, 2 and 3 were diluted in 5 liters of tap water and conditioned to 18 °C. Then the tracers i.e. fabrics such as clothes, towels and the like, with standardized stains were added into each of said prepared solutions. The test was carried out at 18°C for 20 minutes. The vessel was periodically agitated (every 5 min.). At the end of the washing cycle the tracers were rinsed with water. Then, a detergent commercially available on the mark (Dash®) was used to wash the tracers. The tracers were put in a commercial washing machine SANGIORGIO® that was loaded with 170 g of the detergent diluted into 20 liters of tap water. The washing cycle n°3 at 40 °C was used. At the end of the washing cycle the tracers were dried in a room avoiding the direct exposition to sun light. Finally, the tracers were evaluated by visual grading.

The table below lists the results obtained for compositions 1 and 2, versus composition 3 as mathematical average of the results obtained with the two different tests above mentioned.

| | Whiteness single cycle | Greasy stains |
|---|---|---|
| Comp. 1 vs 3 | 1.2S | 0.6S |
| Comp. 2 vs 3 | 0.6S | 0.6S |

Where:
- Results are expressed on a 0 to 4 performance scale evaluated by expert judgment.
- S identifies statistically reproducible results calculated on the basis of 6 replicates each test.

### Comments:

The data clearly shows the unexpected whiteness improvement and excellent stain removal performance delivered by the compositions used according to the present invention comprising benzoic acid as the radical scavenger, this after one wash cycle only (compositions 1 and 2) as compared to composition available on the market (composition 3). Said data also surprisingly shows the synergistic effect of the use of sodium silicate together with benzoic acid, on the whiteness performance (composition 1 as compared to composition 2).

The bleaching compositions used according to the present invention allow to improve fabric whiteness both when used only alone and in association with a detergent composition.

### 2) Examples

Further examples of the compositions used in the present invention are the following. These compositions are made comprising the listed ingredients in the listed proportions (weight %):

| Compositions | 1 | 2 | 3 |
|---|---|---|---|
| Sodium hypochlorite | 5.0 | 5.0 | 5.0 |
| Sodium hydroxide | 0.7 | 0.7 | 0.7 |
| Sodium carbonate | 1.0 | 1.0 | 1.0 |
| 4-toluene sulfonic acid | 1.0 | 1.0 | 0.5 |
| Benzoic acid | / | / | 0.5 |
| Sodium silicate | 1.0 | / | / |
| pH | 13 | 13 | 13 |
| Water & minors | -------100%------- | | |

All the compositions according to the examples above provide excellent whitening performance and safety to the fabrics treated with them while being also particularly efficient in removing stains. These advantages are observed both when using said compositions alone or as a pre-bleach associated with a detergent composition.

## Claims

1. A method of bleaching fabrics to improve fabric whiteness and/or fabric safety which comprises the steps of:
- first contacting said fabrics with an aqueous bleaching composition having a pH of from 9 to 14 comprising an alkali metal hypochlorite or mixtures thereof, silicate salts and/or more than 0.1% by weight carbonate salts, and a radical scavenger or mixtures thereof, **characterised in that** said radical scavenger comprises an unsaturated ring system of from 3 to 20 carbon atoms and has a double bond set comprising a total of 4n+2 electrons, wherein n is an integer of from 0 to 4, and preferably said radical scavenger has one of the following formulas: 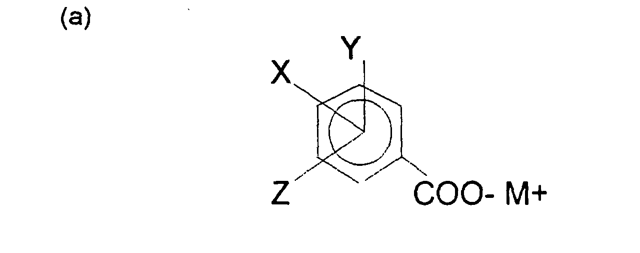 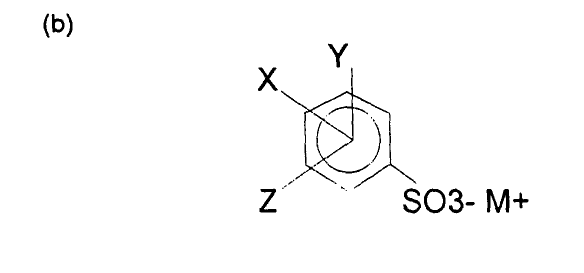 wherein each X, Y, and Z is -H, -COO-M⁺, -Cl, -Br,
-SO₃-M⁺, -NO₂, -OCH₃, -OH, or a C₁ to C₁₀ primary and secondary alkyl and M is H or an alkali metal,
- then allowing said fabrics to remain in contact with said composition for a period of time sufficient to bleach said fabrics,
- then rinsing said fabrics in water to remove said composition.

2. A method according to claim 1 which further comprises a subsequent step where said fabrics are washed with a detergent composition comprising at least one surface active agent.

3. A method according to any of the preceding claims wherein said composition comprises from 0.1% to 10% by weight of the total composition, based on active chlorine, of said alkali metal hypochlorite, preferably from 3% to 6%.

4. A method according to any of the preceding claims wherein said composition comprises from 0.01% to 10% by weight of the total composition of said radical scavenger, or mixtures thereof, preferably from 0.01% to 8%, more preferably from 0.2% to 6% and most preferably from 0.5% to 4%.

5. A method according to any of the preceding claims wherein in said composition, said radical scavenger is selected from the group of benzoic acid, toluic acid, 4-toluene sulfonic acid, 2 n-octyl benzoic acid or mixtures thereof.

6. A method according to any of the preceding claim wherein said composition has a pH of from 10 to 14, preferably of from 11 to 13.5.

7. A method according to any of the preceding claims wherein said composition comprises carbonate salts and silicate salts, preferably sodium carbonate and sodium silicate.

8. A method according to claim 7 wherein said composition comprises from 0.2% to 5% by weight of the total composition of sodium carbonate, preferably from 0.5% to 3% and up to 3% by weight of the total composition of sodium silicate, preferably from 0.02% to 3%, most preferably from 0.04% to 3%.

9. A method according to any of the preceding claims wherein said composition further comprises a complexing agent.

10. The use of an aqueous bleaching composition having a pH of from 9 to 14 comprising an alkali metal hypochlorite or mixtures thereof and a radical scavenger or mixtures thereof, said radical scavenger comprising an unsaturated ring system of from 3 to 20 carbon atoms and having a double bond set comprising a total of 4n+2 electrons, wherein n is an integer of from 0 to 4, and preferably said radical scavenger having one of the following formulas: 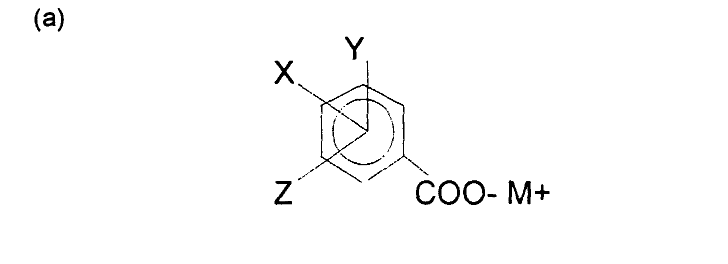 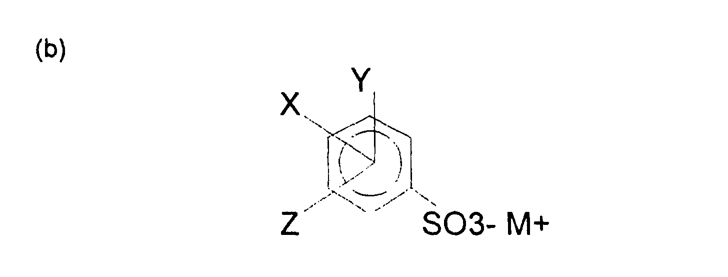 wherein each X, Y, and Z is -H, -COO-M⁺, -Cl, -Br, -SO₃-M⁺, -NO₂, -OCH₃, -OH or a C₁ to C₁₀ primary and secondary alkyl and M is H or an alkali metal, to improve whiteness to the fabrics.

11. A use according to claim 10 wherein said composition further comprises carbonate salts and silicate salts, preferably sodium carbonate and sodium silicate.

## Patentansprüche

1. Verfahren zum Bleichen von Geweben zur Verbesserung der Gewebeweiße und/oder der Sicherheit gegenüber den Geweben, welches die folgenden Schritte umfaßt:
- zuerst Inkontaktbringen der genannten Gewebe mit einer wäßrigen bleichenden Zusammensetzung mit einem pH-Wert von 9 bis 14, welche ein Alkalimetallhypochlorit oder Gemische hievon, Silikatsalze und/oder mehr als 0,1 Gew.-% an Carbonatsalzen und einen Radikalfänger oder Gemische hievon umfaßt, **dadurch gekennzeichnet, daß** der genannte Radikalfänger ein ungesättigtes Ringsystem mit 3 bis 20 Kohlenstoffatomen umfaßt und ein Doppelbindungsset mit insgesamt 4n+2 Elektronen besitzt, wobei n eine ganze Zahl von 0 bis 4 darstellt, und welcher Radikalfänger vorzugsweise eine der folgenden Formeln 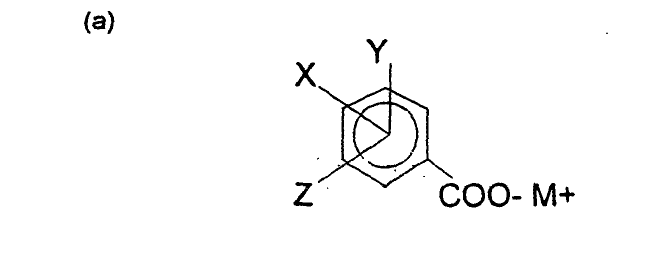 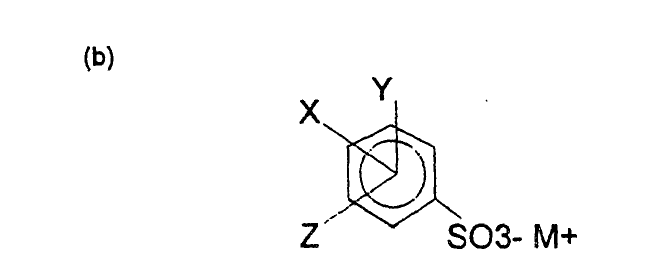 besitzt, worin jeder Rest X, Y und Z für -H, -COO-M+, -Cl, -Br, -SO₃-M⁺, -NO₂, -OCH₃, -OH oder ein primäres und sekundäres C₁-C₁₀-Alkyl steht, und M H oder ein Alkalimetall bedeutet,
- anschließend das Inkontaktbelassen der genannten Gewebe mit der genannten Zusammensetzung während einer ausreichenden Zeitspanne zum Bleichen der genannten Gewebe,
- anschließend Spülen der genannten Gewebe in Wasser zur Entfernung der genannten Zusammensetzung.

2. Verfahren nach Anspruch 1, welches ferner einen darauffolgenden Schritt umfaßt, worin die genannten Gewebe mit einer mindestens ein grenzflächenaktives Mittel umfassenden Detergenzzusammensetzung gewaschen werden.

3. Verfahren nach einem der vorstehenden Ansprüche, worin die genannte Zusammensetzung 0,1% bis 10%, bezogen auf das Gewicht der Gesamtzusammensetzung, basierend auf aktivem Chlor, von dem genannten Alkalimetallhypochlorit, vorzugsweise 3% bis 6% enthält.

4. Verfahren nach einem der vorstehenden Ansprüche, worin die genannte Zusammensetzung 0,01% bis 10%, bezogen auf das Gewicht der Gesamtzusammensetzung, von dem genannten Radikalfänger oder von Gemischen hievon, vorzugsweise 0,01% bis 8%, stärker bevorzugt 0,2% bis 6% und am stärksten bevorzugt 0,5% bis 4% umfaßt.

5. Verfahren nach einem der vorstehenden Ansprüche, worin in der genannten Zusammensetzung der genannte Radikalfänger von der Gruppe der Benzoesäure, Toluylsäure, 4-Toluolsulfonsäure, 2-n-Octylbenzoesäure oder Gemischen hievon ausgewählt ist.

6. Verfahren nach einem der vorstehenden Ansprüche, worin die genannte Zusammensetzung einen pH-Wert von 10 bis 14, vorzugsweise von 11 bis 13,5 besitzt.

7. Verfahren nach einem der vorstehenden Ansprüche, worin die genannte Zusammensetzung Carbonatsalze und Silikatsalze, vorzugsweise Natriumcarbonat und Natriumsilikat umfaßt.

8. Verfahren nach Anspruch 7, worin die genannte Zusammensetzung 0,2% bis 5%, bezogen auf das Gewicht der Gesamtzusammensetzung, an Natriumcarbonat, vorzugsweise 0,5% bis 3%, und bis zu 3%, bezogen auf das Gewicht der Gesamtzusammensetzung, an Natriumsilikat, vorzugsweise 0,02% bis 3%, am stärksten bevorzugt 0,04% bis 3% umfaßt.

9. Verfahren nach einem der vorstehenden Ansprüche, worin die genannte Zusammensetzung ferner ein Komplexierungsmittel umfaßt.

10. Verwendung einer wäßrigen bleichenden Zusammensetzung mit einem pH-Wert von 9 bis 14, welche ein Alkalimetallhypochlorit oder Gemische hievon und einen Radikalfänger oder Gemische hievon umfaßt, welcher Radikalfänger ein ungesättigtes Ringsystem mit 3 bis 20 Kohlenstoffatomen umfaßt und ein Doppelbindungsset mit insgesamt 4n+2 Elektronen aufweist, worin n eine ganze Zahl von 0 bis 4 ist, und welcher Radikalfänger vorzugsweise eine der folgenden Formeln 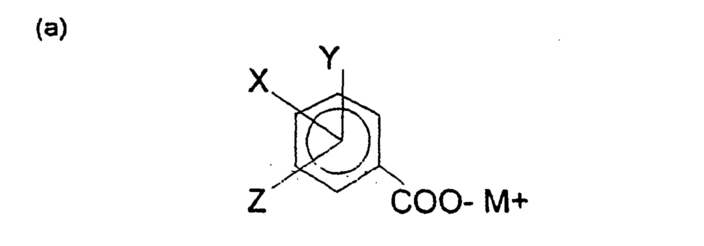 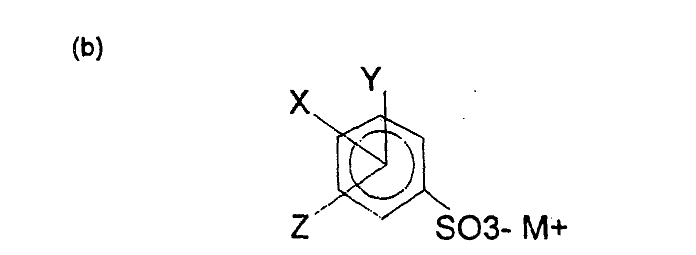 besitzt, worin jeder Rest X, Y und Z für -H, -COO-M+, -Cl, -Br, -SO₃-M⁺, -NO₂, -OCH₃, -OH oder ein primäres und sekundäres C₁-C₁₀-Alkyl steht, und M H oder ein Alkalimetall bedeutet, zur Verbesserung der Gewebeweiße.

11. Verwendung nach Anspruch 10, worin die genannte Zusammensetzung ferner Carbonatsalze und Silikatsalze, vorzugsweise Natriumcarbonat und Natriumsilikat umfaßt.

## Revendications

1. Procédé de blanchiment des textiles pour améliorer leur blancheur et/ou leur innocuité, qui comprend les étapes consistant à :
- tout d'abord mettre en contact lesdits textiles avec une composition de blanchiment aqueuse ayant un pH de 9 à 14 comprenant un hypochlorite de métal alcalin ou un mélange de tels corps, des sels de silicate et/ou plus de 0,1 % en poids de sels de carbonate, et un fixateur de radicaux ou un mélange de tels corps,
**caractérisé en ce que** ledit fixateur de radicaux comprend un système cyclique insaturé de 3 à 20 atomes de carbone et a un ensemble de doubles liaisons comprenant un total de 4n+2 électrons, où n est un nombre entier de 0 à 4 et de préférence ledit fixateur de radicaux a l'une des formules suivantes : 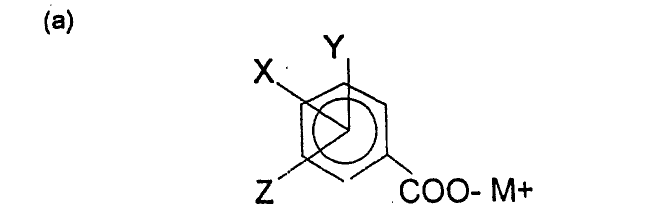 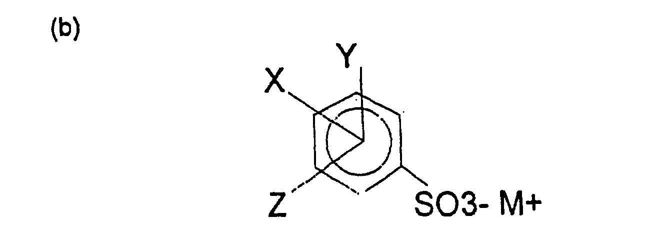 dans lesquelles chacun des symboles X, Y et Z représente -H, -COO-M⁺, -Cl, -Br, -SO₃-M⁺, -NO₂, -OCH₃, -OH ou un alkyle primaire ou secondaire en C₁ à C₁₀ et M représente H ou un métal alcalin,
- puis poursuivre la mise en contact desdits textiles avec ladite composition pendant une durée suffisante pour blanchir lesdits textiles,
- puis rincer lesdits textiles dans l'eau afin de retirer ladite composition.

2. Procédé selon la revendication 1 qui comprend en outre une étape ultérieure dans laquelle on lave lesdits textiles avec une composition détergente comprenant au moins un agent tensioactif.

3. Procédé selon l'une quelconque des revendications précédentes dans lequel ladite composition comprend de 0,1 % à 10 %, en poids de la composition totale, sur la base du chlore actif, dudit hypochlorite de métal alcalin, de préférence de 3 % à 6 %.

4. Procédé selon l'une quelconque des revendications précédentes dans lequel ladite composition comprend de 0,01 % à 10 %, en poids de la composition totale, dudit fixateur de radicaux, ou d'un mélange de tels corps, de préférence de 0,01 % à 8 %, de préférence encore de 0,2 % à 6 %, ou de façon encore plus préférée de 0,5 % à 4 %.

5. Procédé selon l'une quelconque des revendications précédentes dans lequel, dans ladite composition, ledit fixateur de radicaux est choisi dans le groupe constitué par l'acide benzoïque, l'acide toluique, l'acide 4-toluènesulfonique, l'acide 2-n-octyl benzoïque ou leurs mélanges.

6. Procédé selon l'une quelconque des revendications précédentes dans lequel ladite composition a un pH allant de 10 à 14, de préférence de 11 à 13,5.

7. Procédé selon l'une quelconque des revendications précédentes dans lequel ladite composition comprend des sels de carbonate et des sels de silicate, de préférence le carbonate de sodium et le silicate de sodium.

8. Procédé selon la revendication 7 dans lequel ladite composition comprend 0,2 % à 5 %, en poids de la composition totale, de carbonate de sodium, de préférence 0,5 % à 3 %, et jusqu'à 3 %, en poids de la composition totale, de silicate de sodium, de préférence 0,02 % à 3 %, de préférence encore 0,04 % à 3 %.

9. Procédé selon l'une quelconque des revendications précédentes dans lequel ladite composition comprend en outre un agent de complexation.

10. Utilisation d'une composition de blanchiment aqueuse ayant un pH de 9 à 14 comprenant un hypochlorite de métal alcalin ou un mélange de tels corps et un fixateur de radicaux ou un mélange de tels corps, ledit fixateur de radicaux comprenant un système cyclique insaturé de 3 à 20 atomes de carbone et ayant un ensemble de doubles liaisons comprenant un total de 4n+2 électrons où n est un nombre entier de 0 à 4, et de préférence ledit fixateur de radicaux ayant l'une des formules suivantes : 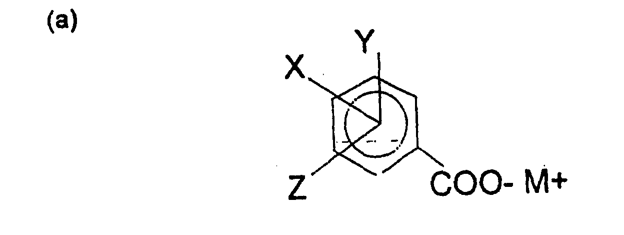 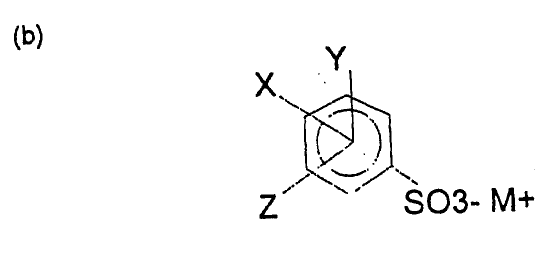 dans lesquelles chacun des symboles X, Y et Z représente -H, -COO-M⁺, -Cl, -Br, -SO₃-M⁺, -NO₂, -OCH₃, -OH ou un alkyle primaire ou secondaire en C₁ à C₁₀ et M représente H ou un métal alcalin, pour améliorer la blancheur des textiles.

11. Utilisation selon la revendication 10 dans laquelle ladite composition comprend en outre des sels de carbonate et des sels de silicate, de préférence du carbonate de sodium et du silicate de sodium.
